# FASCICULE DE BREVET EUROPEEN

(11) **EP 3 009 761 B1**
(45) Date de publication et mention de la délivrance du brevet: **04.04.2018**
(21) Numéro de dépôt: 15187233.0
(22) Date de dépôt: 28.09.2015
(51) Int. Cl.: F24H 3/00, F24H 7/00, F24H 7/06, F24H 9/18, F24D 13/02, F24H 7/02, H05B 3/02, H05B 3/14, H05B 3/26, H05B 3/84

(54) **DISPOSITIF ET SYSTÈME DE CHAUFFAGE ÉLECTRIQUE**
ELEKTRISCHE HEIZVORRICHTUNG UND HEIZSYSTEM
ELECTRIC HEATING DEVICE AND SYSTEM

(30) Priorité: 30.09.2014 FR 1459270
(43) Date de publication de la demande: 20.04.2016
(73) Titulaire: VERELEC, 38950 St Etienne de St Geoirs (FR)
(72) Inventeur: JOUBERT, Frédéric Daniel René, 38140 Beaucroissant (FR)
(74) Mandataire: Martin, Marie-Aude

(56) Documents cités:
- EP-A1- 1 729 070

## Description

La présente invention concerne un panneau radiant électrique, notamment adapté pour un usage domestique et un système de chauffage électrique comprenant le panneau. L'invention concerne plus particulièrement mais non exclusivement un panneau radiant électrique utilisé en tant que chauffage principal ou d'appoint de locaux de tous types. Un tel dispositif de chauffage électrique peut être installé de façon fixe ou mobile.

Le document EP1729070 décrit notamment une structure de plancher chauffant incorporant un réservoir à chaleur latente. Cette structure comprend également une couche d'isolation séparée du réservoir par une feuille de séparation.

Il est fréquent d'utiliser l'énergie électrique pour le chauffage des locaux tels que les habitations, les bureaux ou les locaux professionnels. L'énergie électrique présente de nombreux avantages en comparaison d'autres sources d'énergie traditionnellement utilisées telles que le gaz et le fioul. On retiendra parmi les nombreux avantages notamment la propreté, le confort, la facilité de réglage ainsi qu'un faible investissement initial.

Les dispositifs de chauffage actuellement utilisés pour le chauffage électrique fonctionnent selon le principe de l'effet Joule pour créer une source de chaleur grâce à une chute de potentiel dans une résistance. La chaleur ainsi produite est transférée à l'environnement selon différents principes.

Selon un premier principe, la chaleur est transférée par convection. Dans ce cas, le dispositif de chauffage électrique comprend généralement une résistance logée à l'intérieur d'un réceptacle muni d'entrée et de sortie de l'air. La température de l'air situé au voisinage de la résistance chauffée augmente de sorte que la densité de l'air diminue. Cet air chaud tend à s'élever et un courant ascendant d'air s'établit. L'air chaud est remplacé par de l'air froid qui s'échauffe à son tour. Un tel dispositif de chauffage électrique est désigné de façon commune par le terme « convecteur ».

Selon un deuxième principe, la chaleur est transférée par rayonnement. Dans ce cas, le transfert de l'énergie produite par la résistance chauffée est essentiellement obtenu par le rayonnement émis par celle-ci. De tels dispositifs de chauffage électrique sont désignés couramment par « panneau rayonnant » ou « panneau radiant ».

Selon un troisième principe, la chaleur est transférée par conduction. Dans ce cas, ce transfert s'effectue par contact.

La présente invention se rapporte plus spécifiquement mais non exclusivement au dispositif de chauffage électrique fonctionnant selon le deuxième principe.

En particulier, au sens de la présente invention, on entend par l'expression « radiatif » ou « essentiellement radiatif » le fait que la majeure partie des transferts de chaleur s'effectue par rayonnement ce qui n'exclut pas qu'une partie minoritaire s'effectue par convection.

Un inconvénient de l'utilisation de l'énergie électrique est que son coût rapporté au kilowattheure est sensiblement plus élevé que celui des autres énergies.

Afin de réduire le coût de la consommation électrique des dispositifs de chauffage actuels, différentes solutions ont été apportées.

On a ainsi proposé dans l'état de la technique d'incorporer dans le réceptacle du dispositif de chauffage électrique un noyau ou bloc accumulateur d'énergie qui permet notamment d'emmagasiner de la chaleur pour la restituer ultérieurement.

Un tel dispositif est par exemple décrit dans le document EP0860666B1. Ce document décrit un dispositif de chauffage électrique comprenant un corps de chauffe formé par une pluralité de résistances électriques et un noyau accumulateur d'énergie formé par une brique réfractaire à l'intérieur de laquelle sont noyées les résistances électriques. La brique est par ailleurs enfermée dans une enveloppe formant une carcasse généralement métallique.

Grâce à ce dispositif, il est possible de différer la production de chaleur de sa restitution. La consommation électrique du radiateur est alors optimisée en fonction du coût horaire de l'énergie électrique : l'énergie électrique est consommée pendant les heures dites creuses, généralement de nuit, pour lesquelles il existe un tarif réduit de consommation et la chaleur est accumulée dans le noyau ou bloc accumulateur puis la chaleur emmagasinée est restituée pendant les heures dites pleines, généralement en journée.

Ceci permet de réduire le coût total journalier de la consommation en électricité de tels dispositifs de chauffage.

L'inconvénient d'un tel dispositif de chauffage est qu'il s'avère être particulièrement encombrant. Par ailleurs, le poids de la brique réfractaire est non négligeable et il est souvent nécessaire de disposer le radiateur au sol.

Aussi la présente invention vise à pallier tout ou partie de ces inconvénients tout en permettant une amélioration significative du rendement et donc une diminution importante de la consommation énergétique.

A cet effet, l'invention a pour objet un panneau radiant électrique selon la revendication 1. Au sens de la présente invention, deux éléments sont couplés thermiquement lorsqu'ils ont des échanges thermiques significatifs.

De façon connue en soi, tout objet ou corps terrestre émet de l'énergie par rayonnement. Cette aptitude à émettre est désignée par émissivité. Ainsi, dans le cadre de la présente invention, les échanges thermiques sont réalisés préférentiellement essentiellement par rayonnement.

Au sens de la présente invention, on entendra par état chargé l'état du réservoir lorsque le matériau est dans la deuxième phase et par état déchargé, l'état du réservoir lorsque le matériau est dans la première phase. On pourra définir de façon plus précise les états chargé et déchargé en ajoutant une condition de température. Ainsi, on pourra définir une température dite d'état déchargé et une température dite d'état chargé, ces températures pouvant différer de la température de transition de phase. Par exemple, on pourra considérer que le réservoir est dans un état déchargé lorsqu'en plus d'être dans la première phase, il est à température ambiante par exemple à 20°C et qu'il est dans un état chargé lorsqu'en plus d'être dans la deuxième phase, il a une température prédéfinie supérieure à à la température de transition de phase.

De façon connue en soi, les matériaux à changement de phase sont des matériaux qui ont la propriété d'emmagasiner beaucoup d'énergie thermique lors du changement de phase. Le retour du matériau dans sa phase initiale s'accompagne d'un dégagement d'énergie thermique équivalent à la chaleur latente qui a été nécessaire au changement d'état du matériau.

Lorsque le corps de chauffe est alimenté électriquement, il chauffe et produit de la chaleur qui est en général transmise principalement vers l'extérieur mais également de façon minoritaire vers l'arrière, par exemple en direction de la paroi contre laquelle le panneau radiant est placé.

Grâce à l'invention, la partie minoritaire de l'énergie est récupérée par son stockage dans le réservoir comprenant le matériau à chaleur latente.

Lorsque la température du matériau à chaleur latente atteint sa température de transition ou de changement de phase, alors le matériau à chaleur latente change de phase, et passe par exemple d'un état liquide à un état gazeux (ou d'un état solide à un état liquide). Lorsque la température du corps de chauffe diminue, celle du réservoir aussi et le matériau à chaleur latente passe de l'état gazeux à l'état liquide (ou de l'état liquide à l'état solide) en libérant une quantité d'énergie importante.

Du fait du dépôt en couche électro-conductrice sur la couche support, le rayonnement émis par le corps de chauffe est homogène et atteint le réservoir de façon sensiblement homogène. Le réservoir récupère la chaleur rayonnée de façon homogène ce qui permet un transfert thermique très efficace.

Dans un mode de réalisation préféré de l'invention, le réservoir comprend une pluralité de capsules contenant chacune au moins ledit matériau à changement de phase. Les capsules forment ainsi une enveloppe pour entourer le matériau à changement de phase. Par exemple, le matériau à changement de phase est à base de paraffine, de polymères, etc.

Dans un mode de réalisation préféré de l'invention, la distance séparant le corps de chauffe et le réservoir est non nulle.

Ainsi, le transfert thermique entre le corps de chauffe et le réservoir est réalisé essentiellement par rayonnement. Comme le corps de chauffe et le réservoir ne sont pas en contact, il n'y a pas de transfert thermique par conduction. Le corps de chauffe et le réservoir sont séparés d'une distance comprise entre par exemple 2 millimètres et 50 millimètres.

Dans un mode de réalisation préféré de l'invention, la couche électriquement conductrice est rune couche mince réalisée par un procédé de métallisation sous vide. Ce procédé de métallisation permet de former une couche avec une répartition très homogène du ou des matériaux électriquement conducteurs.

Le transfert thermique par rayonnement entre le corps de chauffe et le réservoir est ainsi encore nettement amélioré.

Dans un mode de réalisation préféré de l'invention, le matériau à changement de phase a une température de transition supérieure ou égale à 75°C. La récupération thermique est ainsi optimisée avec cette température.

Dans un mode de réalisation préféré de l'invention, le corps de chauffe forme une paroi frontale du réceptacle. Le réceptacle comprend une paroi arrière disposée en regard et à distance de la paroi frontale, le réservoir s'étendant entre les deux parois.

Dans un mode de réalisation préféré de l'invention, le panneau comprend un élément isolant thermiquement configuré dans le réceptacle de manière à limiter l'émission d'un flux énergétique en direction de la paroi arrière.

De préférence, la couche électriquement conductrice est une couche réflectrice de la lumière. Ceci permet d'utiliser le panneau radiant électrique en tant que miroir également.

L'invention concerne également un système de chauffage électrique comprenant un panneau selon l'invention, **caractérisé en ce qu'**il comprend des moyens de pilotage de l'alimentation du corps de chauffe en fonction d'un état de charge du réservoir.

Dans un mode de réalisation préféré, les moyens sont configurés pour piloter l'alimentation du corps de chauffe de manière à générer une pluralité de cycles de charge-décharge du réservoir.

Dans un mode de réalisation préféré, les moyens sont configurés pour désactiver l'alimentation du corps de chauffe lorsque le réservoir est chargé et pour activer l'alimentation du corps de chauffe lorsque le réservoir est déchargé.

Dans un mode de réalisation préféré, le système comprend des moyens de détermination de l'état de charge par une mesure d'une première température et d'une deuxième température respectivement en deux points du réservoir d'accumulation d'énergie, les points étant choisis de manière à ce que la différence entre ces deux températures soit liée à un état de charge du réservoir ou par une mesure d'une durée prédéterminée correspondant à une durée de charge ou de décharge.

D'autres caractéristiques et avantages de l'invention apparaîtront à la lumière de la description qui suit, faite en référence aux dessins annexés dans lesquels :
- la figure 1 représente une vue en perspective d'un panneau radiant selon l'invention,
- la figure 2 représente une vue éclatée et en perspective du panneau représenté sur la figure 1,
- les figures 3A et 3B représentent des vues respectivement d'une face externe et d'une face interne d'une paroi frontale du panneau radiant représenté sur les figures 1 et 2;
- la figure 4 représente une vue schématique d'un système de chauffage selon l'invention.

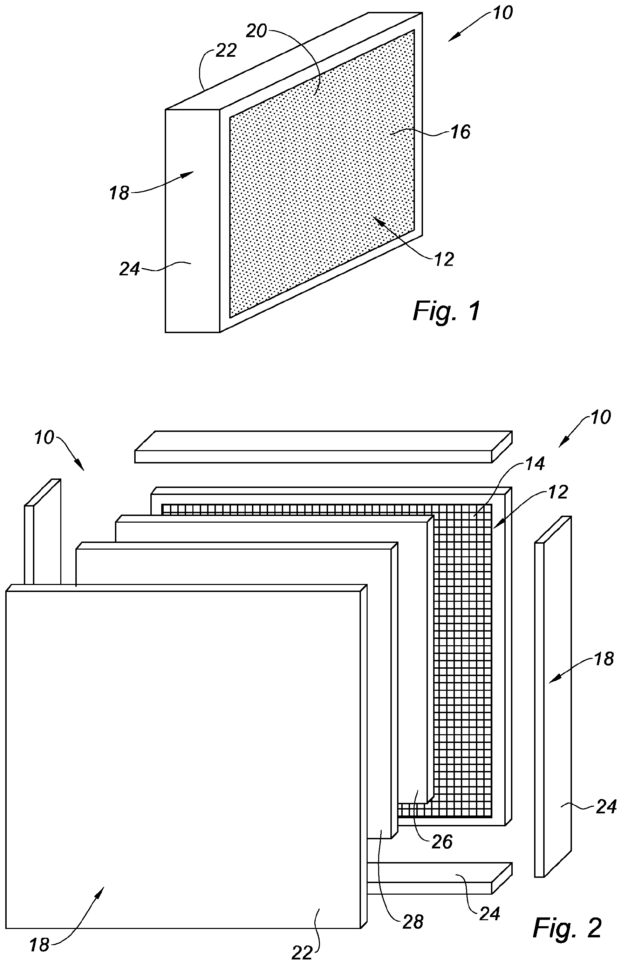

On a représenté sur **la** **figure** 1 un panneau radiant selon l'invention. Ce panneau radiant est désigné par la référence générale 10. Ce panneau 10 est dans cet exemple aussi nommé dispositif de chauffage. Ainsi, de préférence, le dispositif de chauffage électrique 10 est à émission essentiellement radiative. Le dispositif de chauffage électrique transfert par exemple la chaleur sous forme de rayonnement infrarouge dans une gamme de longueurs d'onde essentiellement comprises entre 15 micromètres et 1 millimètre. Par exemple, le dispositif de chauffage 10 est à composante essentiellement radiative, par exemple représentant plus de 40% de la puissance émise totale et de préférence plus de 50%.

Au sens de la présente invention, on entend par efficacité du panneau radiant, la puissance thermique directement utile au chauffage et transmise uniquement par le rayonnement de la face émettrice du corps de chauffe vers la zone à chauffer. L'efficacité se définit également comme le rapport de la puissance rayonnée par la face émettrice du corps de chauffe vers la zone à chauffer.

On a représenté en détail sur **la** **figure** 2 les différents éléments constituant le dispositif de chauffage 10.

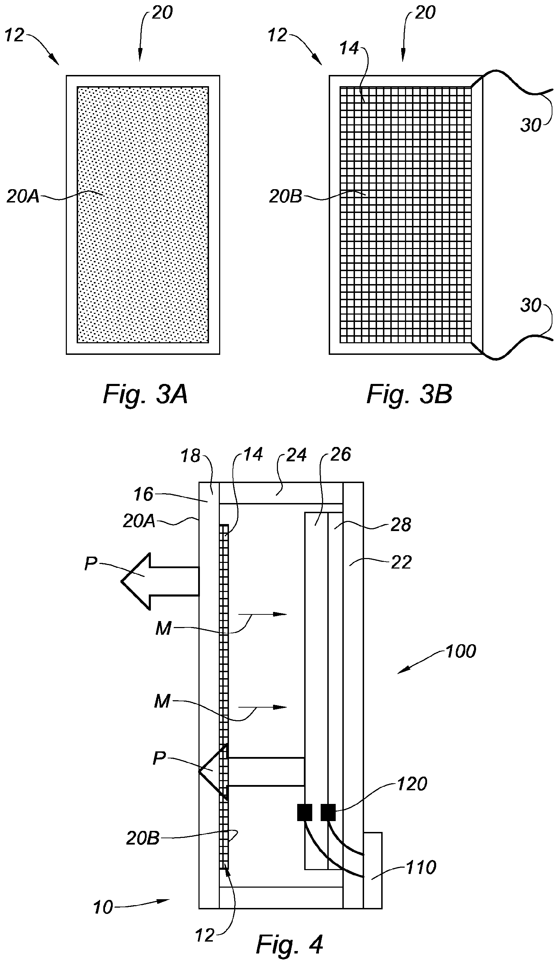

Le dispositif de chauffage 10 comprend un corps de chauffe 12 configuré pour être alimenté électriquement par une source d'alimentation électrique (non représentée). Ce corps de chauffe 12 est illustré en détail sur **les** **figures 3A et 3B****.**

Le corps de chauffe 12 fonctionne selon le principe de l'effet joule. Le corps de chauffe 12 forme ainsi une résistance électrique dans laquelle l'électricité qui la traverse se transforme en chaleur par effet joule.

Dans ce cas, l'énergie infrarouge rayonnée est en première approximation proportionnelle à la puissance quatrième de la température Kelvin, selon la loi de Stephan et Boltzmann. Il s'ensuit que la résistance électrique doit être portée à haute température, par exemple au moins égale à 100°C pour une utilisation domestique. La norme électrique française réglementant cette caractéristique de température est la norme NF EN 60335-2-30.

Le corps de chauffe 12 est configuré pour être raccordé à une source d'alimentation électrique (non représentée), par exemple au moyen de conducteurs électriques 30.

Le corps de chauffe 12 comprend une couche électriquement conductrice 14 à basse émissivité par exemple inférieure à 0,2 et une couche support 16 à forte émissivité sur laquelle la couche 14 est déposée. A titre d'indication, l'épaisseur de la couche résistive ou électriquement conductrice est comprise entre 200 et 2000 angströms. Cette couche résistive 14 dite de basse émissivité est par exemple configurée de telle sorte que la puissance surfacique dégagée par le corps de chauffe 12 soit comprise entre 300 W/m² et 1500 W/m².

Par ailleurs, la couche électriquement conductrice 14 est formée de préférence par une couche mince d'un ou de plusieurs matériaux électriquement conducteurs. Ce dépôt en couche mince permet notamment d'obtenir l'émission d'un flux de rayonnement très homogène.

Par exemple, la couche électro-conductrice 14 est réalisée dans un matériau composé essentiellement de chrome pur et d'oxyde de chrome, la proportion d'oxyde de chrome étant choisie de façon à conférer à la dite couche électro-conductrice la résistivité appropriée. Dans une variante, la couche électro-conductrice peut être formée par un alliage essentiellement à base de nickel et de chrome. De préférence, la couche électriquement conductrice 12 est formée par dépôt sous vide, par exemple au moyen d'un magnétron, selon un procédé de métallisation sous vide.

Dans une variante non illustrée sur les figures, la couche électro-conductrice peut comprendre un film réalisé dans une matière plastique incorporant un fil électriquement conducteur. Ce film est par exemple collé directement sur la face arrière de la couche support.

De préférence, la couche électriquement conductrice 14 est une couche réflectrice. Ceci permet d'obtenir un miroir ce qui apporte un aspect particulièrement esthétique particulièrement apprécié pour une utilisation domestique.

Le dispositif de chauffage électrique 10 comprend également un réceptacle 18. Le réceptacle 18 comprend dans cet exemple une paroi frontale 20 et une paroi arrière 22 disposée à distance et en regard de la paroi frontale 20.

Le réceptacle 18 forme de préférence une enceinte fermée étanche à l'air.

Ceci présente l'avantage de limiter les transferts thermiques par convection. Ainsi, dans cet exemple, le réceptacle 18 comprend un cadre périphérique 24 réalisé en aluminium. Dans une variante non illustrée sur les figures, le réceptacle peut former une enceinte partiellement ouverte.

Par ailleurs, dans l'exemple décrit, la paroi frontale 20 comprend une face externe 20A et une face interne 20B tournée vers l'intérieur du réceptacle 18. La couche électro-conductrice 14 est agencée de préférence sur cette face interne 20B.

Selon l'invention, la paroi frontale 20 est formée par la couche de support 16 à forte émissivité sur laquelle est déposée la couche électriquement conductrice 14 à basse émissivité.

Une telle disposition a pour avantage que l'essentiel des radiations infrarouges sont émises vers la pièce et une partie minime en direction du mur, en raison de la faible émissivité (par exemple au plus 0,2 et de préférence 0,15) de la couche conductrice 14 et de la forte émissivité de la couche support 16 (supérieur à 0.9).

Par exemple, la couche de support 16 est réalisée dans un matériau peu conducteur d'électricité voire même isolant électriquement. Le matériau comprend notamment par exemple du verre ou de la céramique. De préférence, la plaque de verre 16 formant la couche support est constituée par un verre thermiquement résistant et suffisamment isolant à la température de fonctionnement du corps de chauffe. Par exemple des verres à base borosilicate ou les vitro-céramiques conviennent pour cette application. De préférence, la plaque de verre est trempée afin d'améliorer sa résistance aux chocs thermiques.

Conformément à l'invention, le dispositif de chauffage électrique 10 comprend un réservoir 26 d'accumulation d'énergie. Ce réservoir 26 comprend au moins un matériau à changement de phase.

Le matériau à changement de phase a une température prédéfinie de transition d'une première phase à une deuxième phase, par exemple d'une phase solide à une phase liquide.

En particulier, le réservoir 26 est configuré pour adopter un état déchargé et un état chargé correspondant respectivement à la première phase et à la deuxième phase du matériau par couplage thermique avec le corps de chauffe 12.

Au sens de l'invention, on pourra considérer que le réservoir 26 est dans un état chargé lorsque le matériau à chaleur latente est intégralement dans sa deuxième phase, par exemple liquide. On considérera que le réservoir 26 est dans un état déchargé, lorsque le matériau est dans sa première phase, par exemple solide. On pourra également définir des températures d'état chargé et d'état déchargé, différentes de la température de transition de phase. Par exemple, on pourra considérer que l'état déchargé correspond à un état dans lequel le réservoir est à température ambiante, par exemple celle de la pièce dans laquelle se situe le radiateur.

Le réservoir 26 comprend de préférence une pluralité de capsules contenant le ou les matériaux à changement de phase. Ces capsules ont par exemple une forme générale de bille.

Dans l'exemple décrit, le réservoir 26 a une forme générale de plaque délimitée notamment par deux faces avant et arrière et le réservoir 26 forme une enceinte fermée pour contenir la pluralité de capsules.

En variante, le réservoir 26 peut comprendre une structure formant une matrice incorporant une pluralité de capsules contenant le ou les matériaux à changement de phase. La structure du réservoir peut être réalisée par exemple dans une résine thermiquement conductrice ou dans un matériau tel que du graphite.

En particulier, selon l'invention, le matériau à changement de phase a une température de transition d'une première phase à une deuxième phase telle que le couplage thermique du réservoir 26 avec le corps de chauffe 12 puisse permettre le passage du matériau de la première phase à la deuxième phase.

Le matériau à changement de phase a une température de transition de phase comprise par exemple entre 60°C et 80°C, d e préférence supérieure à 75 °C .

Plus précisément et comme cela est illustré sur **la** **figure 2****,** le corps de chauffe 12 est agencé dans le réceptacle 18 pour générer un rayonnement principal vers l'extérieur et un rayonnement secondaire en direction du réservoir 26. Les flux thermiques sont représentés de façon schématique sur **la** **figure** 4 par des flèches et portent les références P pour flux principal et M pour flux minoritaire.

Ainsi, de préférence, la paroi frontale 20, la paroi arrière 22, le réservoir 26 sont réunis ensemble par un cadre fermé réalisé par exemple en aluminium.

Par ailleurs, le dispositif de chauffage 10 comprend encore un élément isolant thermiquement 28 pour limiter le flux énergétique du réservoir 26 vers la paroi arrière 22. Par exemple, l'élément isolant 28 est un isolant mince multicouche réflecteur composé essentiellement d'un assemblage de films réflecteurs et de séparateurs associés (par exemple ouates, mousses). Ces films réflecteurs ont notamment pour fonction de réfléchir le rayonnement thermique.

On a représenté sur **la** **figure 4** un système de chauffage électrique selon l'invention. Ce système de chauffage est désigné par la référence générale 100. Ce système 100 incorpore le panneau radiant 10 selon l'invention.

Plus particulièrement, le système 100 comprend des moyens 102 pour piloter l'alimentation du corps de chauffe 12 en fonction d'un état de charge du réservoir 26.

De préférence, ces moyens de pilotage 110 sont configurés pour piloter l'alimentation du corps de chauffe 12 de manière à générer une pluralité de cycles de charge-décharge du réservoir 26. Ceci permet d'optimiser la consommation électrique du système de chauffage électrique 100 en mettant à profit l'énergie thermique accumulée dans le réservoir 26 à chaque cycle de charge.

De préférence, les moyens de pilotage 110 sont configurés pour désactiver l'alimentation du corps de chauffe 12 lorsque le réservoir 26 est chargé et pour activer l'alimentation du corps de chauffe 12 lorsque le réservoir 26 est déchargé ou au moins partiellement déchargé.

En outre, dans cet exemple, le système 100 comprend des moyens 120 de détermination de l'état de charge du réservoir 26 par une mesure d'une première température et d'une deuxième température respectivement en deux points du réservoir d'accumulation d'énergie 26, les points étant choisis de manière à ce que la différence entre ces deux températures soit liée à un état de charge du réservoir 26.

Par exemple, les moyens de détermination 120 comprennent deux sondes de températures positionnées respectivement sur une face avant 26A et une face arrière 26B du réservoir 26. Ces deux sondes indiquent une différence de température qui est transformée par un calcul en indication de charge du réservoir 26.

En variante, l'état de la charge peut être déterminé en fonction de l'écoulement d'une durée prédéterminée. Cette durée est déterminée au préalable et correspond par exemple à un temps de charge ou de décharge du réservoir 26.

On va maintenant décrire les principaux aspects de fonctionnement du système de chauffage électrique selon l'invention.

Dans un premier temps, on va considérer que la température de la pièce est à 14°C et que le système de chauffage 100 électrique est éteint. Dans cet état initial, le réservoir 26 est dans un état déchargé, par exemple à l'état solide. Sa température est celle de la pièce.

Au cours d'une première étape, le système de chauffage électrique 100 est activé. Le corps de chauffe 12 est donc alimenté électriquement et sa température augmente par exemple jusqu'à atteindre 100°C.

Un cycle de charge démarre.

En effet, du fait du couplage thermique du corps de chauffe 12 avec le réservoir 26, ce dernier voit également sa température augmenter jusqu'à atteindre sa température de transition de phase. Le matériau du réservoir 26 va alors absorber l'énergie thermique sous forme latente, sans que sa température n'augmente (la liquéfaction est endothermique et absorbe de l'énergie). Lorsque le matériau du réservoir 26 devient liquide, le réservoir 26 est dans un état chargé.

Les moyens de détermination 120 de l'état de charge du réservoir 26 délivrent alors aux moyens de pilotage 110 l'indication selon laquelle le réservoir 26 est chargé.

Les moyens 110 pilotent alors le système 100 pour désactiver le corps de chauffe 12.

Un cycle de décharge démarre.

La température du corps de chauffe 12 descend et celle du réservoir 26 également. Comme le réservoir 26 n'est plus soumis à une source de chaleur à proximité, la température du réservoir 26 diminue et les billes de matériau à changement changent brutalement d'état en libérant une relativement grande quantité d'énergie correspondant à la chaleur latente.

Le matériau à changement de phase va se solidifier à nouveau. Cette transformation est exothermique ce qui signifie qu'elle rejette de l'énergie. Le réservoir rayonne de la chaleur essentiellement vers le corps de chauffe 12 grâce en particulier à l'élément réflecteur et isolant thermiquement 28.

Le dispositif 100 rayonne alors l'énergie apportée par le réservoir 26 vers l'extérieur.

Lorsque la température du réservoir 26 descend en-dessous de 40°C, par exemple 25°C, les moyens de détermination 120 de l'état de charge délivrent aux moyens de pilotage 110 l'indication selon laquelle le réservoir 26 est dans un état déchargé. Par conséquent, les moyens de pilotage 110 pilotent l'activation de l'alimentation du corps de chauffe 12.

Un nouveau cycle de charge démarre.

Bien entendu, d'autres modes de réalisation sont envisageables sans sortir du cadre de l'invention. Ainsi, diverses modifications peuvent être apportées par l'homme du métier à l'invention qui vient d'être décrite à titre d'exemple.

## Revendications

1. Panneau radiant électrique (10), notamment adapté pour un chauffage à usage domestique, du type comprenant :
- un corps de chauffe (12) configuré pour être raccordé à une source d'alimentation électrique,
- un réservoir (26) d'accumulation d'énergie couplé thermiquement avec le corps de chauffe (12) comprenant au moins un matériau à changement de phase avec une température prédéfinie de transition d'une première phase à une deuxième phase, et étant configuré pour adopter un état déchargé et un état chargé correspondant respectivement à la première phase et à la deuxième phase du matériau par couplage thermique avec le corps de chauffe (12),
ledit panneau comprenant un réceptacle (18) à l'intérieur duquel s'étendent le corps de chauffe (12) et le réservoir (26), où le corps de chauffe (12) forme une paroi frontale (20) du réceptacle (18) et le réceptacle (18) comprend une paroi arrière (22) disposée en regard et à distance de la paroi frontale (20), le réservoir (18) s'étendant entre les deux parois,
**caractérisé en ce que** le corps de
chauffe (12) comprend une couche support (16) à forte émissivité et une couche électro-conductrice (14) à faible émissivité déposée sur la couche support (16), le corps de chauffe (12) étant agencé dans le réceptacle (18) pour générer un transfert thermique essentiellement vers l'extérieur et un transfert thermique secondaire vers le réservoir (26).

2. Panneau (10) selon la revendication précédente, dans lequel la distance séparant le corps de chauffe (12) et le réservoir (26) est non nulle.

3. Panneau (10) selon l'une quelconque des revendications précédentes, dans lequel la couche électro-conductrice (14) est une couche mince réalisée par un procédé de métallisation sous vide.

4. Dispositif (10) selon l'une quelconque des revendications 1 à 2, dans lequel la couche électro-conductrice (14) comprend un film réalisé dans une matière plastique incorporant un fil électriquement conducteur.

5. Panneau (10) selon l'une quelconque des revendications précédentes, dans lequel le matériau à changement de phase a une température de transition supérieure ou égale à 75°C.

6. Panneau (10) selon l'une quelconque des revendications précédentes, dans lequel la couche électriquement conductrice (14) est une couche réflectrice de la lumière.

7. Panneau (10) selon l'une quelconque des revendications précédentes, dans lequel la couche support (16) a une émissivité d'au moins 0,9 et la couche électro-conductrice (14) a une émissivité d'au plus 0,2.

8. Système (100) de chauffage électrique comprenant un panneau radiant (10) selon l'une quelconque des revendications précédentes, **caractérisé en ce qu'**il comprend des moyens (110) de pilotage de l'alimentation du corps de chauffe (12) en fonction d'un état de charge du réservoir (26).

9. Système (100) selon la revendication précédente, dans lequel les moyens de pilotage (110) sont configurés pour piloter l'alimentation du corps de chauffe (12) de manière à générer une pluralité de cycles de charge-décharge du réservoir (26).

10. Système (100) selon la revendication 8 ou 9, dans lequel les moyens de pilotage (110) sont configurés pour désactiver l'alimentation du corps de chauffe (12) lorsque le réservoir (26) est chargé et pour activer l'alimentation du corps de chauffe (12) lorsque le réservoir (26) est déchargé.

## Patentansprüche

1. Elektrische Heizplatte (10), insbesondere geeignet für das Heizen im Hausgebrauch, von dem Typ, der Folgendes umfasst:
- einen Heizkörper (12) konfiguriert, um an eine elektrische Stromquelle angeschlossen zu werden,
- einen Energiespeicher (26), der thermisch mit dem Heizkörper (12) verbunden ist und mindestens ein Material zur Phasenumwandlung umfasst, mit einer vordefinierten Übergangstemperatur einer ersten Phase in eine zweite Phase und so konfiguriert, dass er einen geladenen Status und einen ungeladenen Status annimmt, die jeweils der ersten Phase und der zweiten Phase des Materials entsprechen, durch thermische Kupplung an den Heizkörper (12),
wobei die genannte Platte einen Behälter (18) umfasst, in dessen Inneren sich der Heizkörper (12) und der Speicher (26) befinden, wo der Heizkörper (12) eine frontale Wand (20) des Behälters (18) bildet und der Behälter (18) eine hintere Wand (22) umfasst, die gegenüber und entfernt von der frontalen Wand (20) angeordnet ist und der Behälter (18) sich zwischen den beiden Wänden ausdehnt, **dadurch gekennzeichnet, dass** der Heizkörper (12) eine Trägerschicht (16) mit hohem Emissionsgrad und eine elektrisch leitfähige Schicht (14) mit geringem Emissionsgrad auf der Trägerschicht (16), umfasst, wobei der Heizkörper (12) so in dem Behälter (18) angeordnet ist, dass er eine thermische Übertragung hauptsächlich nach Außen durchführt und eine thermische sekundäre Übertragung zu dem Speicher (26).

2. Platte (10) nach dem vorangegangenen Anspruch, bei der der Abstand, der den Heizkörper (12) und den Speicher (26) trennt, nicht null ist.

3. Platte (10) nach einem der vorangegangenen Ansprüche, bei der die elektrisch leitfähige Schicht (14) eine dünne Schicht ist, die durch ein Verfahren der Metallisierung im Vakuum hergestellt wird.

4. Vorrichtung (10) nach einem der vorangegangenen Ansprüche 1 bis 2, bei der die elektrisch leitfähige Schicht (14) einen Film umfasst, der aus einem Plastikmaterial hergestellt ist, das einen elektrisch leitfähigen Draht umfasst.

5. Platte (10) nach einem der vorangegangenen Ansprüche, bei der das Material zur Phasenumwandung eine Temperatur über oder gleich 75°C hat.

6. Platte (10) nach einem der vorangegangenen Ansprüche, bei der die elektrisch leitfähige Schicht (14) eine lichtreflektrierende Schicht ist.

7. Platte (10) nach einem der vorangegangenen Ansprüche, bei der die Trägerschicht (16) einen Emissionsgrad von wenigstens 0,9 aufweist und die elektrisch leitfähige Schicht (14) einen Emissionsgrad von höchstens 0,2.

8. System (100) zur elektrischen Erwärmung, bestehend aus einer Heizplatte (10) nach einem der vorangegangenen Ansprüche, **dadurch gekennzeichnet, dass** es über Mittel (110) zur Steuerung der Versorgung des Wärmekörpers (12) je nach Ladestatus des Speichers (26) verfügt.

9. System (100) nach dem vorangegangenen Anspruch, bei dem die Mittel zur Steuerung (110) konfiguriert sind, um die Versorgung des Heizkörpers (12) so zu steuern, dass eine Vielzahl an Zyklen des Ladens-Entladens des Speichers (26) erzeugt werden.

10. System (100) nach dem Anspruch 8 oder 9, bei dem die Steuermittel (110) so konfiguriert sind, dass die Versorgung des Heizkörpers (12) deaktiviert wird, wenn der Speicher (26) geladen ist und die Versorgung des Heizkörpers (12) aktiviert wird, wenn der Speicher (26) entladen ist.

## Claims

1. Radiant panel (10), in particular suitable for domestic heating, comprising :
- a heating body (12) configured to be connected to a power supply terminal,
- an energy store unit (26) thermally coupled to the heating body (12) comprising at least a phase change material with a predefined transition temperature from a first phase to a second phase, and being configured to adopt a discharged state and a charged state corresponding respectively to the first phase and to the second phase of the material thermally coupled with the heating body (12),
the said panel comprising a receptacle (18) within which extend the heating body (12) and the store unit (26), and in which the heating body (12) forms a front wall element (20) of the receptacle (18) and the receptacle (18) comprises a rear wall element (22) disposed distancially and facing the front wall element (20), the store unit (18) extending between the two wall elements,
**characterized in that** the heating body (12) comprises a high emissivity substrate layer (16) and a low emissivity electroconductive layer (14) deposited on the substrate layer (16), the heating body (12) being in the receptacle (18) to generate a heat transfer substantially outwardly and a secondary heat transfer toward the store unit (26).

2. Panel (10) according to the claim 1, in which the separation distance between the heating body (12) and the store unit (26) is non-zero.

3. Panel (10) according to any of the precedings claims, in which the electro-conductive layer (14) is a thin film realized by deposition of a vaporizing material.

4. Panel (10) according to any of the claims 1 and 2, in which the electro-conductive layer (14) comprises a film realized in a plastic material incorporating an electrically conductive wire.

5. Panel (10) according to any of the precedings claims, in which the phase change material has a transition temperature higher 75°C or greater.

6. Panel (10) according to any of the preceding claims, in which the electro-conductive layer (14) is a reflective layer.

7. Panel (10) according to any of the preceding claims, in which the substrate layer (16) has an emissivity of at least 0,9 and the electro-conductive layer (14) has an emissivity of at least 0,2.

8. Electric heating system (100) comprising a radiant panel (10) according to any of the preceding claims, **characterized in that** it comprises means (110) for controlling and supplying the heating body (12) according to the charged state of the store unit (26).

9. System (100) according to the preceding claim, in which the means for controlling (110) are configured to control and supply the heating body (12) in order to generate a plurality of charge-discharge cycles of the store unit (26).

10. System (100) according to claim 8 or 9, in which the means for controlling (110) are configurated to desactivate the supply of the heating body (12) when the store unit (26) is charged and to activate the supply of the heating body (12) when the store unit (26) is discharged.
